# FASCICULE DE BREVET EUROPEEN

(11) **EP 3 580 606 B1**
(45) Date de publication et mention de la délivrance du brevet: **03.03.2021**
(21) Numéro de dépôt: 18705684.1
(22) Date de dépôt: 29.01.2018
(51) Int. Cl.: G02C 5/22

(54) **MONTURE DE LUNETTES A ORIENTATION DES BRANCHES SELON PLUSIEURS PLANS**
BRILLENGESTELL MIT BÜGELAUSRICHTUNG GEMÄSS EINER VIELZAHL VON EBENEN
SPECTACLE FRAME WITH TEMPLE ORIENTATION ACCORDING TO A PLURALITY OF PLANES

(30) Priorité: 13.02.2017 FR 1751141; 25.04.2017 FR 1753594
(43) Date de publication de la demande: 18.12.2019
(73) Titulaire: Sonthonnax, Alexandre, 1207 Genève (CH); Japan Optical Co., Ltd, Ritto-City, Shiga 520-3024 (JP)
(72) Inventeur: SONTHONNAX, Alexandre, Ritto-City Shiga 520-3024 (CH); KIMURA, Tatsuro, Ritto-City Shiga 520-3024 (JP)
(74) Mandataire: Cabinet Laurent & Charras
(86) Numéro de dépôt international: PCT/FR2018/050190
(87) Numéro de publication internationale: WO 2018/146396

(56) Documents cités:
- WO-A1-2007/045742
- WO-A1-2008/031204
- WO-A2-2008/012683
- FR-A1- 2 737 020

## Description

### DOMAINE DE L'INVENTION

L'invention concerne le domaine des montures de lunettes.

Plus spécifiquement, l'invention a trait à une monture de lunettes dont les branches peuvent être orientées et notamment déplacées selon au moins deux plans distincts.

### ETAT ANTERIEUR DE LA TECHNIQUE

Traditionnellement, une monture de lunettes est constituée d'une face avant, recevant les verres, optiques ou solaires, cette face avant étant sensiblement orientée dans un plan vertical lors du port de la monture par un utilisateur. Des branches sont articulées sur cette face avant, de telle sorte que l'on peut procéder à l'ouverture desdites branches, en vue de permettre le positionnement de la monture sur la face de l'utilisateur et corollairement, la fermeture ou repliage des branches contre ladite face avant, en vue notamment de permettre le rangement de la monture dans une poche ou dans un étui.

Afin d'accroître le confort de l'utilisateur et le maintien correct de la monture sur la face de l'utilisateur, et corollairement d'optimiser la résistance mécanique de la monture, il est connu de conférer auxdites branches une certaine élasticité, soit inhérente au matériau constitutif de la branche elle-même, soit résultant de l'articulation de la branche sur la face avant. Cette élasticité permet notamment un déplacement des branches au-delà de la position d'ouverture stable des branches, résultant classiquement de la coopération de la base des branches avec une butée ménagée sur la face avant.

De nombreuses charnières élastiques ont ainsi été décrites, tel que par exemple dans les documents EP 0 137 885 ou encore FR 2 609 816.

Un autre problème rencontré avec les montures de lunettes relève de leur relative fragilité aux chocs et autres contraintes mécaniques accidentelles, susceptibles de se traduire par une déformation de la face avant et une altération du parallélisme entre les branches et leur position respective par rapport à la face avant.

Afin de surmonter cette difficulté, on a proposé des montures de lunettes, dont les branches sont susceptibles de se déplacer également selon un plan, dénommé ci-après par plan transversal, c'est-à-dire dans un plan sensiblement perpendiculaire au plan vertical dans lequel s'inscrit la face avant, et à un plan horizontal, correspondant au plan de débattement traditionnel des branches par rapport à ladite face avant pour permettre l'ouverture ou le repliage des branches. De telles montures ont par exemple été décrites dans les documents FR 2 942 889 ou encore FR 3 001 052.

Quels que soient les éléments mis en œuvre pour aboutir à ce double degré de liberté de débattement des branches de lunettes, il est observé que les moyens pour arriver à ce résultat sont relativement complexes à mettre en œuvre, et tendent à alourdir la monture elle-même, engendrant un surdimensionnement soit des branches de lunettes, soit des tenons émanant de la face avant, et donc de la face avant elle-même.

En outre, les dispositifs connus de l'art antérieur ne permettent qu'un débattement limité des branches de lunettes dans le plan qualifié de transversal.

Par ailleurs, un autre problème technique est lié à la stabilité de la branche par rapport à la face avant de la monture, lorsque ladite branche est en position ouverte, c'est-à-dire permettant le port de la monture par un utilisateur.

L'objectif recherché par la présente invention réside dans la simplification des éléments à mettre en œuvre, dans l'augmentation du débattement des branches dans ledit plan transversal, et dans l'optimisation de la stabilité du positionnement relatif des branches par rapport à la face avant de la monture..

### EXPOSE DE L'INVENTION

A cet effet, l'invention vise une monture de lunettes comprenant une face avant de support des verres, sensiblement orientée dans un plan vertical lors du port de ladite monture, et de branches reliées à la face avant au moyen de charnières, lesdites charnières comportant chacune un organe de fixation, respectivement solidaires de la face avant de la monture et des branches, recevant chacun un organe d'articulation dont l'extrémité libre est pourvue d'un axe d'articulation, lesdits axes d'articulation étant perpendiculaires l'un par rapport à l'autre.

Selon l'invention :
- les organes de fixation sont creux et définissent un fourreau cylindrique,
- les organes d'articulation comportent chacun une tige, destinée à être reçue dans le fourreau respectif, tige dont l'une des extrémités est pourvue d'une butée, et dont l'autre extrémité est munie dudit axe d'articulation, chacune des tiges recevant un anneau coulissant ou un organe équivalent, soumis à l'action d'un ressort venant en appui contre la butée, ledit anneau ou organe équivalent étant solidaire de l'organe de fixation correspondant au voisinage de l'extrémité libre dudit organe de fixation,
- les axes d'articulation des organes d'articulation étant solidarisés l'un à l'autre au moyen d'un organe de liaison traversé par lesdits axes d'articulation.

En d'autres termes, l'invention consiste à mettre en œuvre une monture de lunettes pourvue d'une double charnière élastique, l'élasticité résultant des ressorts dont sont munis les organes d'articulation coopérant avec l'anneau coulissant (ou organe équivalent) respectif, en excluant tout système de came ou de rotule, comme décrit dans les dispositifs de l'art antérieur. Les ressorts assurent le rappel de la branche dans sa position nominale, c'est-à-dire stable en position ouverte.

Selon une caractéristique de l'invention, les extrémités libres des organes de fixation présentent une forme parallélépipédique.

En outre, la surface desdites extrémités libres des organes de fixation est plate. Ce faisant, lorsque les branches sont ouvertes, afin de permettre le port de la monture par l'utilisateur, lesdites surfaces sont en contact l'une de l'autre.

Selon une autre caractéristique de l'invention, l'organe de fixation sur la face avant présente, sur l'une de ses faces latérales émanant de l'extrémité libre, un évidement, et l'organe de fixation sur la branche présente une excroissance émergeant de sa surface plane, de dimensions sensiblement correspondantes à la largeur de l'évidement, afin d'être reçu dans celui-ci lorsque la branche est ouverte et lorsque la branche est repliée.

On assure ce faisant un positionnement stable de la branche par rapport à la face avant. Cependant, et en raison des formes respectives de l'évidement et de l'excroissance, ladite branche peut-être ouverte de manière supplémentaire par rapport à cette position stable, donc dans le plan horizontal, afin d'accroître comme rappelé en préambule le confort de l'utilisateur et le maintien efficace de la monture sur l'utilisateur. Alternativement, et dans le même objectif, seule une partie de la surface desdites extrémités libres des organes de fixation est plate, lesdites surfaces comportant respectivement des excroissances et des évidements de forme complémentaire

### BREVE DESCRIPTION DES FIGURES

La manière dont l'invention peut être réalisée et les avantages qui en découlent, ressortiront mieux de l'exemple de réalisation qui suit, donné à titre indicatif et non limitatif à l'appui des figures annexées.
La figure 1 est une représentation schématique partielle en perspective d'une monture de lunettes conforme à l'invention en position standard branche ouverte.
Les figures 2 et 3 sont des représentations schématiques en perspective partielle de la monture de lunettes de la figure 1 avec débattement de l'une des branches dans le plan transversal.
Les figures 4 et 5 sont des représentations schématiques de la monture de la figure 1 avec illustration (figure 5) du débattement de la branche dans le plan horizontal, au-delà de la position normale de la branche.
La figure 6 est une représentation schématique éclatée de la charnière conforme à un premier mode de réalisation de l'invention.
La figure 7 est une représentation schématique en éclaté des organes d'articulation de la charnière du premier mode de réalisation de l'invention.
Les figures 8 et 9 d'une part, et 10 et 11 d'autre part illustrent le double mouvement de rotation des organes d'articulation, respectivement dans le plan horizontal et dans le plan transversal du premier mode de réalisation de l'invention.
La figure 12 est une illustration des organes d'articulation avec déplacement de l'anneau coulissant dont ils sont munis chacun selon le premier mode de réalisation de l'invention..
Les figures 13 et 14 sont des représentations schématiques desdits organes de fixation et d'articulation illustrant l'extension possible desdits organes de fixation selon le premier mode de réalisation de l'invention.
Les figures 15 et 16 illustrent schématiquement la rotation des organes de fixation et d'articulation dans le plan vertical selon le premier mode de réalisation de l'invention.
La figure 17 illustre schématiquement la rotation desdits organes dans le plan horizontal au-delà de la position stable d'ouverture de la branche.
La figure 18 illustre schématiquement les organes de fixation lorsque la branche est en position ouverte et selon sa position stable.
La figure 19 est une vue analogue à la figure 18 après avoir subi une rotation de 180 ° par rapport à la direction longitudinale.
La figure 20 est une représentation schématique des organes de fixation avec la branche en position repliée, donc après rotation dans le plan horizontal.
La figure 21 illustre la rotation des organes de fixation dans le plan transversal.
La figure 22 est une vue analogue à la figure 21, mais selon un autre angle de vue, de même que la figure 23.
La figure 24 est une représentation schématique de la charnière de l'invention en vue latérale d'un second mode de réalisation de l'invention.
La figure 25 est une représentation schématique de la charnière de la figure 24 en éclaté.
Les figures 26 et 27 sont des représentations schématiques partielles en perspective des organes de fixation selon ce second mode de réalisation de l'invention.
La figure 28 est une représentation schématique en perspective des organes d'articulation selon le second mode de réalisation de l'invention.
Les figures 29 et 30 illustrent schématiquement la coopération des extrémités libres des organes de fixation selon le second mode de réalisation de l'invention, selon deux vues distinctes l'une de l'autre d'une rotation de 180 °.
Les figures 31 à 37 illustrent schématiquement et de manière simplifiée la coopération des organes de fixation et d'articulation lors de la rotation de la branche dans le plan horizontale pour différents degrés de débattement selon le second mode de réalisation de l'invention..

### DESCRIPTION DETAILLEE DE L'INVENTION

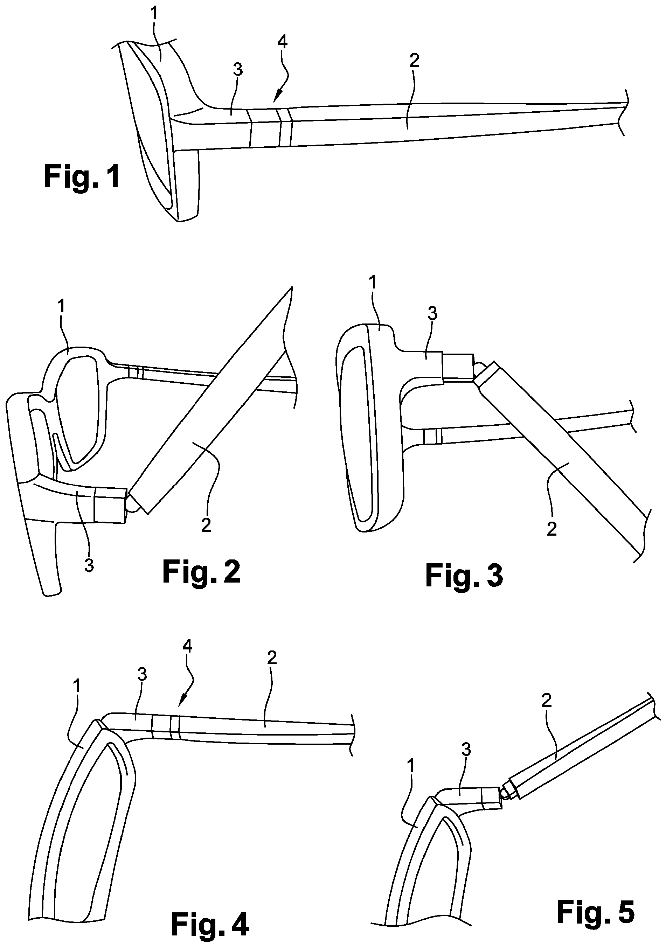

On a donc représenté en relation avec les figures 1 à 5 la monture de lunettes conforme à l'invention. Celle-ci comporte traditionnellement une face avant 1, recevant les verres et typiquement orientée dans un plan sensiblement vertical lorsque la monture est portée par l'utilisateur.

Cette monture comprend également des branches latérales 2, reliées à des tenons 3 émanant sensiblement perpendiculairement de la face avant 1 dans le plan qualifié d'horizontal, au moyen d'une charnière portant la référence générale 4.

La monture de lunettes conforme à l'invention est susceptible (voir figures 4 et 5) d'un débattement des branches **2** dans le plan horizontal, avec en outre un débattement supplémentaire de la branche au-delà de son positionnement normal ou stable, illustré à la figure 4, positionnement normal correspondant aux branches dépliées en vue de permettre le port de la monture par l'utilisateur.

Corollairement, les branches de la monture de lunettes de l'invention sont susceptibles également d'un débattement dans le plan transversal illustré au niveau des figures 2 et 3.

### PREMIER MODE DE REALISATION DE L'INVENTION

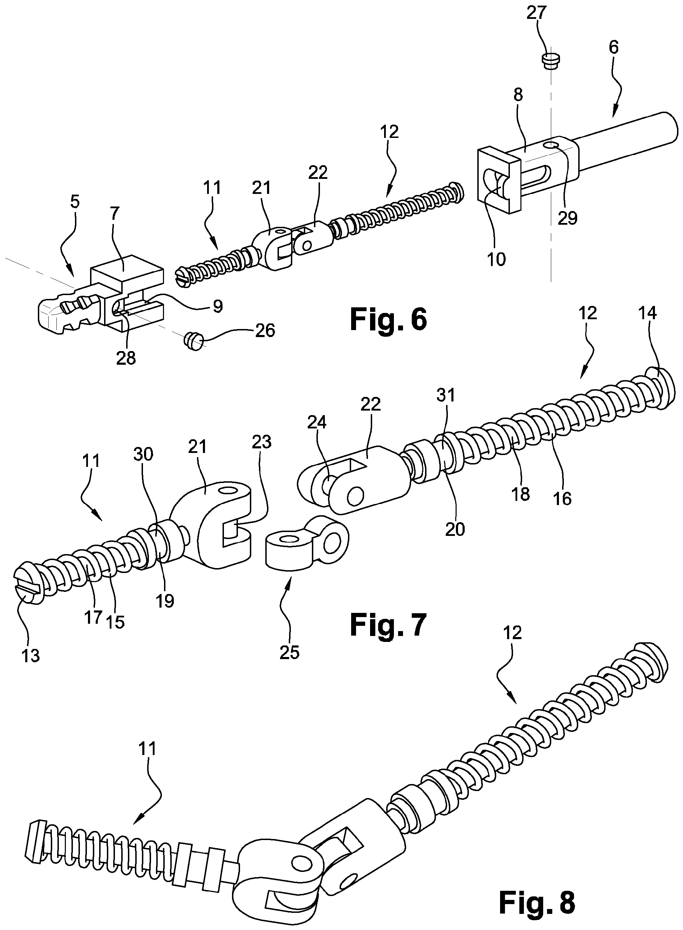

On a représenté au sein des figures 6 et 7 l'un des aspects de l'invention. Fondamentalement la charnière **4** est tout d'abord constituée d'organes de fixation, respectivement **5** dans le tenon **3,** et **6** dans la branche **2,** typiquement réalisés en métal, voire en matériau composite.

Ces organes de fixation sont destinés à être solidarisés au tenon **3** et à la monture **2.** Cette solidarisation peut intervenir de différentes manières : vissage, collage, clipsage ou encore surmoulage.

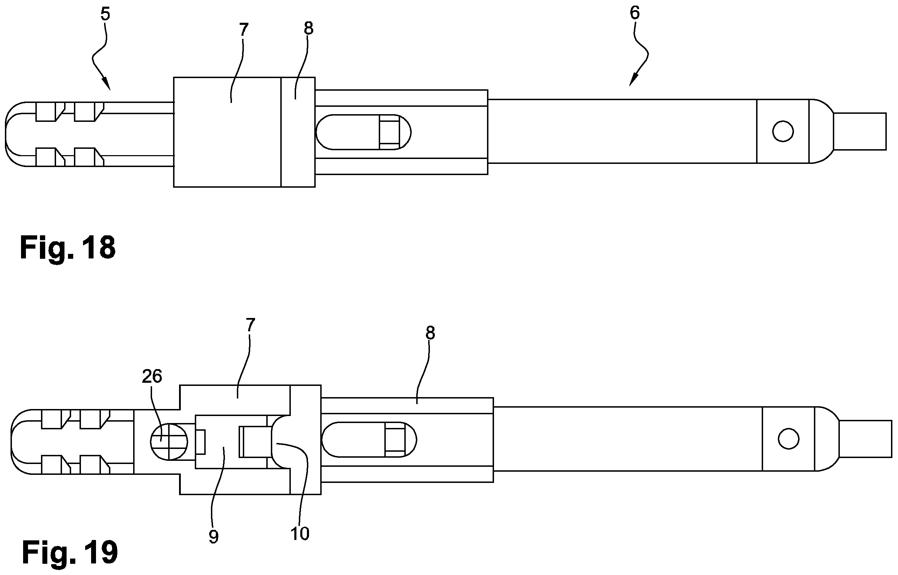

Leurs extrémités libres (respectivement **7** et **8)** sont, ainsi qu'on peut l'observer notamment sur la figure 6, de forme sensiblement parallélépipédique. Ces extrémités libres se terminent par une surface plane, destinées à venir en contact l'une de l'autre lorsque la branche est en position ouverte ou stable (telle que représenté à la figure 1), et telle qu'au demeurant, on l'a représenté sur les figures 18 et 19.

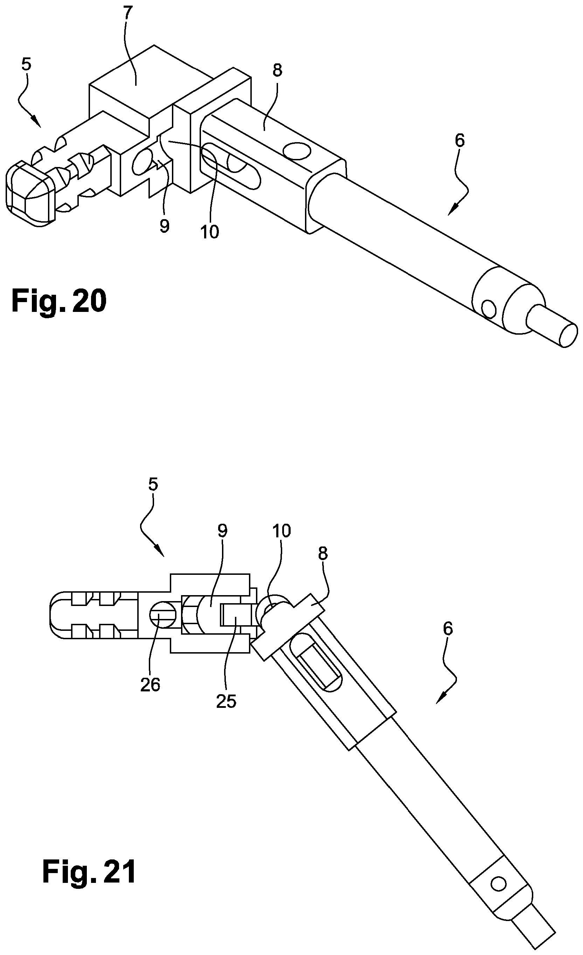

L'une des faces latérales de l'extrémité libre **7** de l'organe de fixation du tenon **5** présente un évidement **9,** en l'espèce, constitué par une lumière allongée, destinée à coopérer avec une excroissance **10,** émergeant de l'extrémité libre **8** de l'organe de fixation **6** sur la branche **2.** Les dimensions respectives de l'évidement **9** et de l'excroissance **10** sont donc choisies en conséquence pour permettre cette coopération. Ladite coopération peut en outre être observée notamment sur les figures 19 et 20.

Par ailleurs, au voisinage de l'extrémité libre **8** de l'organe de fixation **6** sur la branche **2,** une lumière longitudinale est ménagée.

Les organes de fixation, respectivement **5** et **6,** sont de forme allongée, et définissent un fourreau, destiné à recevoir chacun un organe qualifié d'articulation, respectivement **11** et **12** décrits ci-après plus en détail.

Chacun de ces organes d'articulation est constitué d'une tige rigide, respectivement **17** et **18,** typiquement réalisée en acier. Chacune des tiges est munie d'une butée respectivement **13** et **14** à l'une de ses extrémités, butée contre laquelle vient prendre appui un ressort, respectivement **15** et **16.**

L'autre extrémité des tiges **17** et **18** opposée à la butée **13, 14,** reçoit les éléments proprement dits d'articulation, respectivement **21** et **22,** chacun muni d'un axe d'articulation **23, 24.** Les axes d'articulation **23, 24** sont orientés perpendiculairement l'un par rapport à l'autre. Ces éléments d'articulation sont chacun sensiblement en forme de U.

Un anneau, respectivement **19** et **20,** est susceptible de coulisser sur chacune des tiges. L'autre extrémité des ressorts **15** et **16** prend appui respectivement contre ces anneaux.

Les anneaux **19** et **20** sont solidaires des organes de fixation **5** et **6,** au voisinage des extrémités **13** et **14** desdits organes. Cette solidarisation est réalisée au moyen de vis **26, 27,** reçues dans un alésage **28, 29** ménagé dans lesdites extrémités, l'extrémité libre desdites vis venant s'insérer dans une gorge **30, 31** ménagée à la périphérie desdits anneaux.

Enfin, lesdits éléments d'articulation **21, 22** sont solidarisés l'un à l'autre au moyen d'un organe de liaison **25.** Cet organe de liaison, mieux représenté sur la figure 7, se présente sous la forme de deux disques solidaires l'un avec l'autre, et percés en leur centre, les percements étant d'axes perpendiculaires l'un par rapport à l'autre. Lesdits disques sont destinés à être reçus entre les branches des U définissant les éléments d'articulation **21, 22,** et à être traversés par les axes d'articulation **23** et **24.**

En d'autres termes, les organes d'articulation **11, 12** sont solidaires l'un de l'autre, et ne peuvent donc pas s'écarter l'un de l'autre.

En revanche, en raison de la présence des axes d'articulation **23, 24** et du mode de solidarisation à l'aide de l'organe de liaison **25,** ils sont articulés l'un par rapport à l'autre, et sont donc susceptibles d'un double mouvement d'articulation selon deux plans perpendiculaires, et en l'espèce selon un plan horizontal et selon un plan vertical au sens de la définition donnée à ces plans dans le cadre de la présente invention.

Parallèlement, les organes de fixation **5, 6,** et par voie de conséquence, les branches et la face avant, sont susceptibles de se déplacer linéairement l'un par rapport à l'autre.

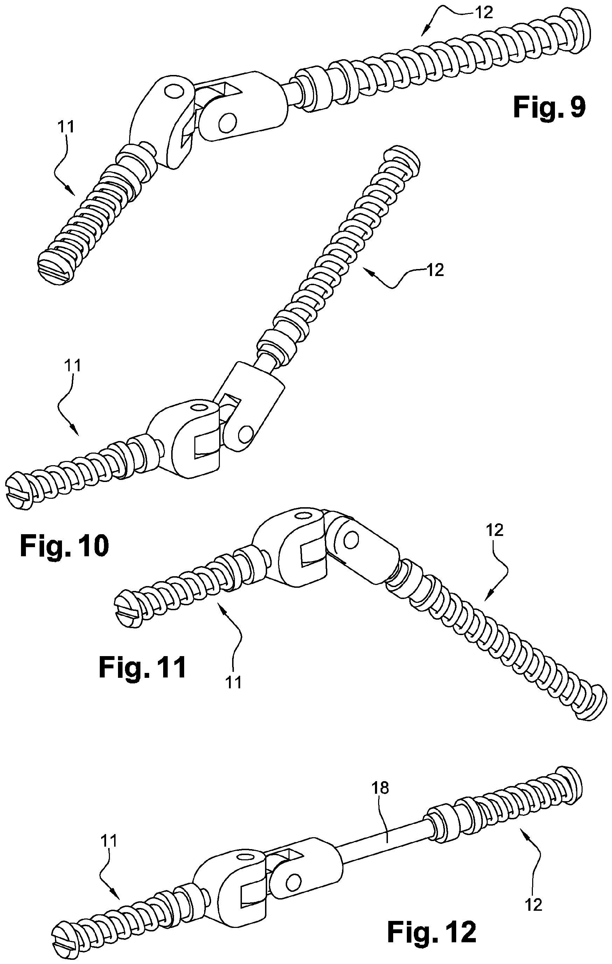

En effet, de par le mode de solidarisation des organes d'articulation au sein des organes de fixation, en l'espèce par le biais des vis **26, 27** coopérant avec les anneaux coulissants **19, 20,** on comprend qu'une traction peut être exercée sur lesdits organes d'articulation, se traduisant par l'extraction partielle de la tige correspondante hors de l'organe de fixation correspondant, et corollairement la compression du ressort de la tige considérée (voir figures 12, 13, 14). Cette compression engendre un effet de rappel, conduisant lorsque la contrainte (en l'espèce la traction) a cessé, le retour de l'organe de fixation à sa position la plus stable, et donc corollairement le retour de la branche à sa position nominale, c'est-à-dire en mode ouvert (figures 1 et 4).

Il suffit de sélectionner les ressorts avec une constante de raideur appropriée pour disposer de l'effet ainsi recherché, en fonction de la facilité de manipulation souhaitée de la monture.

Cependant, le déplacement relatif des branches par rapport aux tenons est affecté par la forme particulière des extrémités des organes de fixation **5, 6.**

Ainsi, en position nominale ou stable de la branche par rapport au tenon, c'est-à-dire en position ouverte correspondant aux figures 1 et 4, les surfaces planes des extrémités libres **7** et **8** sont en contact l'une de l'autre. Dans cette configuration, les ressorts **15** et **16** sont en extension maximum, et corollairement, leur force de compression est minimum. Cela correspond aux figures 18 et 19.

Dans cette configuration, l'excroissance **10** vient se loger au niveau de l'extrémité de la lumière **9** débouchant au niveau de la surface plane correspondante de l'extrémité **7.**

Lors du repliage de la branche sensiblement parallèlement à la face avant, en vue de permettre le rangement de la monture dans un étui par exemple, l'utilisateur fait basculer la branche considérée en direction de la face avant. Ce mouvement engendre la coopération entre l'une des arêtes de l'extrémité **8** de l'organe de fixation **6** avec la surface plane de l'extrémité 7 de l'organe de fixation **5,** et corollairement l'extraction partielle des tiges **17, 18,** et donc des organes d'articulation hors des organes de fixation. Une nouvelle position stable est obtenue, après rotation de 90° de la branche concernée. La stabilité de cette position résulte de la coopération de la surface plane de l'extrémité **8** avec la face latérale plane de l'extrémité **7,** contiguë à la surface plane de l'extrémité **7** et au sein de laquelle est ménagée la lumière allongée **9.** Ce faisant, l'excroissance **10** vient se loger dans la lumière **9,** également dans cette position stable.

Ainsi, bien que dans cette configuration, l'organe d'articulation **11** émerge partiellement hors de l'organe de fixation **5,** et engendre corollairement l'effet de rappel inhérent à la compression du ressort **15,** on dispose d'une stabilité en raison de la forme respective des extrémités libres **7** et **8** desdits organes de fixation : voir figure 20.

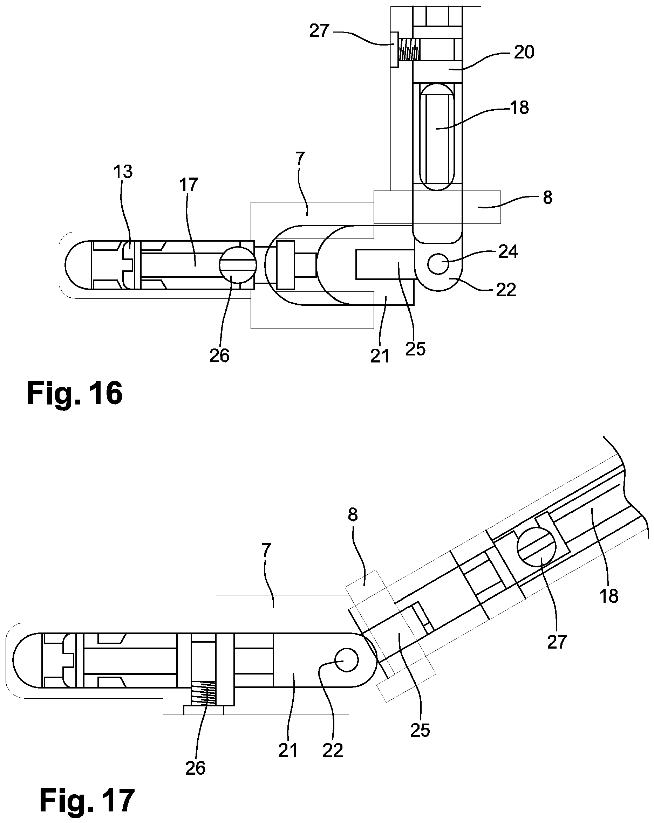

On a représenté en relation avec la figure 17, le possible débattement de la branche au-delà de sa position stable (branche ouverte) dans le plan horizontal. Dans cette configuration, il n'y a pas stabilité, en raison de l'absence de coopération excroissance **10**/lumière **9,** de sorte qu'une fois que la contrainte née de l'écartement de la branche au-delà de sa position stable cesse, la branche retourne à sa position stable sous l'effet du rappel né des ressorts agissant en compression contre les anneaux **19, 20** et donc des organes de fixation correspondants.

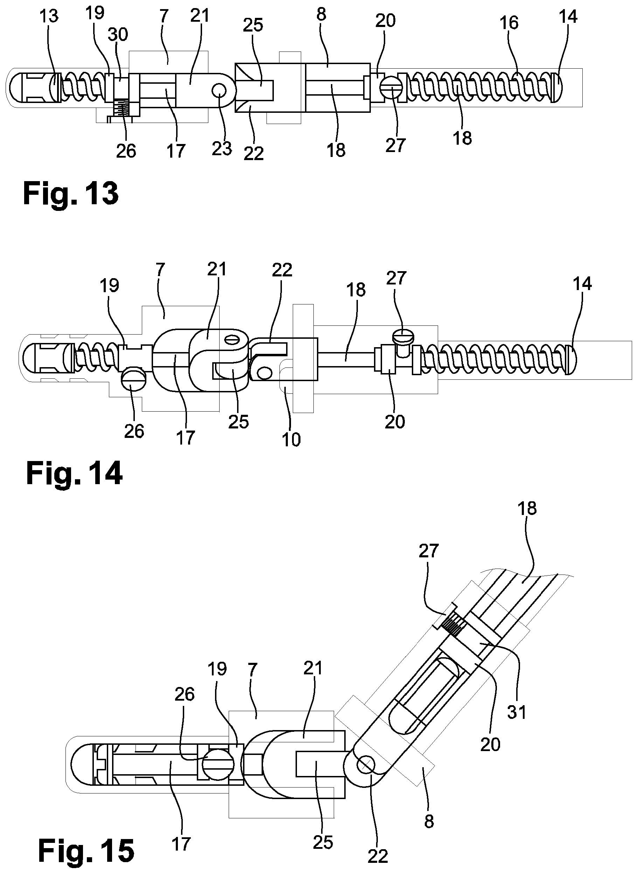

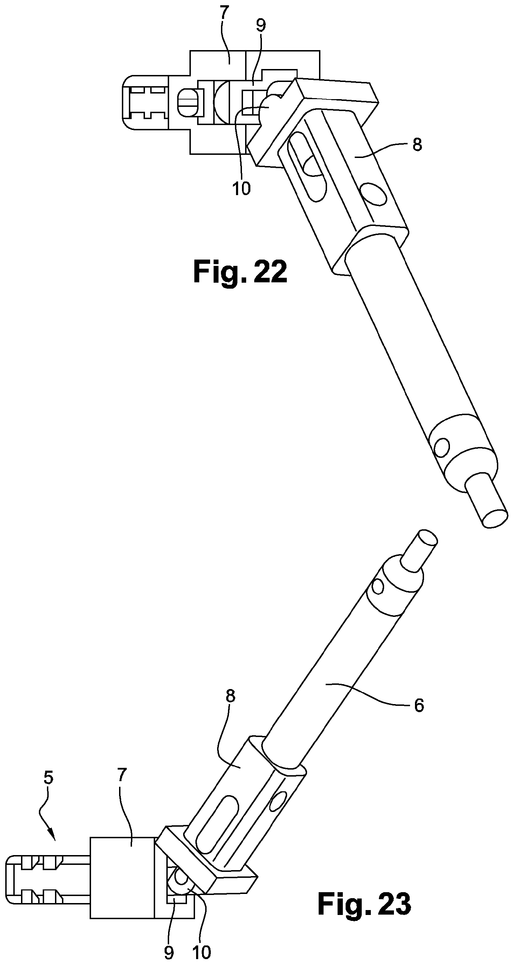

En outre, la branche peut être déplacée également dans un plan transversal (figures 15, 16, 21, 22, 23). Cette faculté est inhérente au double axe d'articulation ménagé à l'extrémité des organes d'articulation. Cependant, ce débattement dans le plan transversal ne comporte pas de position stable autre que la position nominale décrite précédemment, en raison d'une part, de la forme spécifique des extrémités libres des organes de fixation, et d'autre part, de l'absence de moyens de type excroissance/évidement susceptible de conférer une telle stabilité.

Ainsi, dès lors que la contrainte née de l'écartement de la branche dans le plan transversal cesse, la branche retourne à sa position stable.

### SECOND MODE DE REALISATION DE L'INVENTION

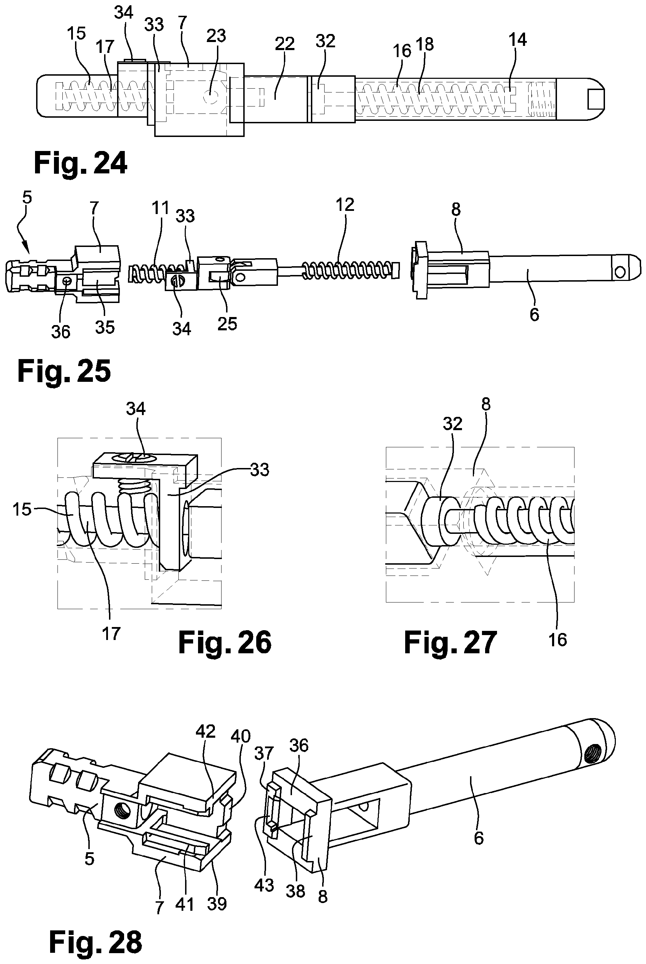

On a représenté en relation avec les figures 24 à 37 un second mode de réalisation de l'invention. Fondamentalement, le fonctionnement selon ce second mode de réalisation est identique à celui du premier mode décrit précédemment.

Cependant, dans un souci de simplification des organes mis en œuvre d'une part et corollairement de limitation de l'encombrement généré par l'ensemble charnière, et de stabilité de l'orientation des branches par rapport à la face avant de la monture d'autre part, certains desdits organes subissent des modifications, décrites ci-après plus en détail.

Ainsi et en premier lieu, les anneaux coulissants **19** et **20** du premier mode de réalisation sont remplacés respectivement d'une part :
- par une plaque **33** intégrée au sein de l'extrémité libre **7** de l'organe de fixation **5** solidaire de la face avant de la monture, ladite plaque étant percée d'un orifice traversant au sein duquel est susceptible de coulisser la tige **17** de l'organe d'articulation **11** correspondant, ladite plaque **33** s'étendant perpendiculairement en direction de ladite face avant, cette extension recevant une vis **34** vissée dans un orifice fileté **36** ménagé au sein de ladite extrémité libre **7,** et apte à coopérer avec le ressort **15** afin de servir de point d'application audit ressort ;
- par un anneau **32** solidaire de la base de l'extrémité libre **8** de l'organe de fixation **6** de la branche **2,** ledit anneau étant percé en son centre d'un orifice traversant apte à permettre le coulissement de la tige **18** de l'organe d'articulation **12** correspondant, cet anneau faisant là encore fonction de point d'application du ressort **16.**

En raison de ces modifications, le volume, et donc l'encombrement corollaire des organes de fixation, et plus particulièrement des extrémités libres desdites organes est réduit. En outre, leur réalisation et leur assemblage s'en trouvent simplifiés par rapport au premier mode de réalisation.

On a en outre représenté au sein de la figure 28 une vue schématique simplifiée des organes de fixation **5** et **6.**

La face terminale de l'extrémité **8** de l'organe de fixation **6** présente une surface plane **36,** destinée à venir en contact avec la surface plane **42** de la face terminale de l'extrémité **7** de l'organe de fixation **5** lorsque la branche **2** est en position ouverte, c'est-à-dire lorsque la monture est portée par l'utilisateur.

En outre, il émerge de ladite surface **36** deux excroissances ou saillies, respectivement **37** et **38,** positionnées sur deux bords opposés de ladite face terminale. L'une **37** de ces excroissances est sensiblement en forme de U, qui définit un évidement central **43** destiné à coopérer avec une excroissance **40** émergeant de l'un des bords de la face terminale de l'extrémité **7.** L'autre **38** de ces excroissances est destinée à coopérer avec des épaulements **41** ménagés de part et d'autre de la lumière **9** ménagée sur l'une des faces latérale de l'extrémité 7 de l'organe de fixation **5.**

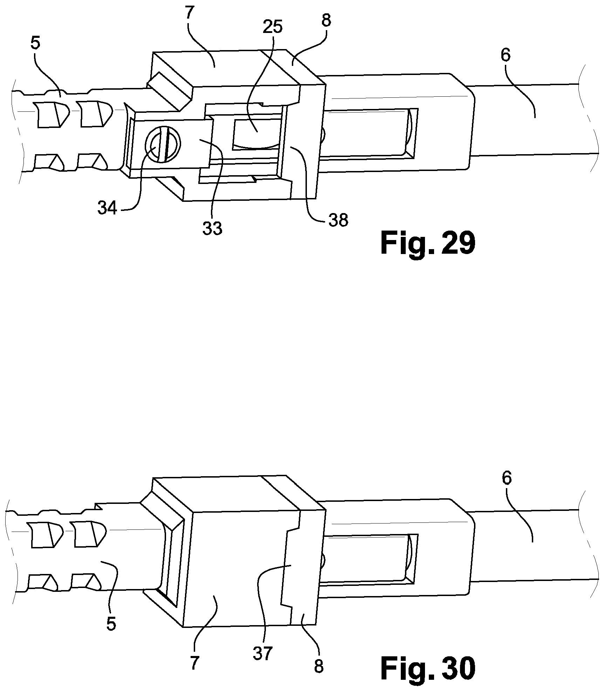

Ainsi qu'on peut l'observer sur les figures 29, 30 et 31, lorsque la branche **2** est ouverte, c'est-à-dire lorsque la monture est portée par un utilisateur, les excroissances et évidements précités coopèrent entre eux, de sorte qu'en raison de l'action des ressorts **15** et **16,** outre de la liaison entre les deux organes d'articulation par le biais de l'organe de liaison **25,** tendant naturellement, c'est-à-dire en l'absence de toute contrainte extérieure, à induire le rapprochement des organes de fixation l'un de l'autre, on obtient une véritable stabilité de cette position de la branche.

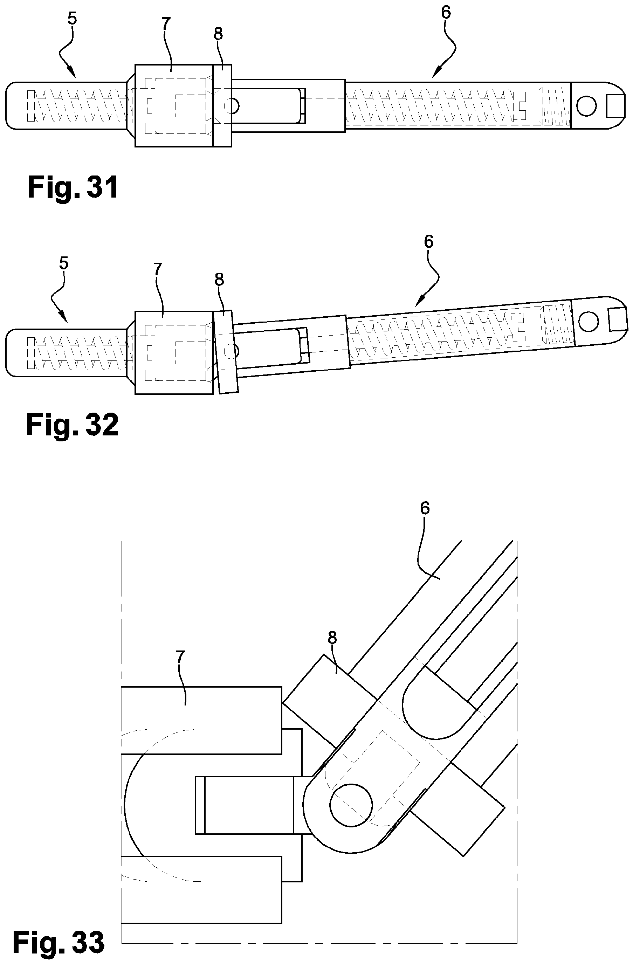

On a par ailleurs illustré au sein des figures 32 à 37 diverses orientations de l'organe de fixation de la branche par rapport à celui de la face avant dans le plan horizontal (selon la terminologie retenue).

Ainsi, dans le cas d'une faible inclinaison par rapport à la position stable de la figure 31, et illustrée au sein des figures 32 et 33, on peut observer que le bord de la face terminale de l'organe de fixation de la branche prend appui sur la face terminale de l'organe de fixation de la face avant. Cette position est instable, en raison de l'action des ressorts, outre de la liaison entre les organes d'articulation de la monture et de la face avant.

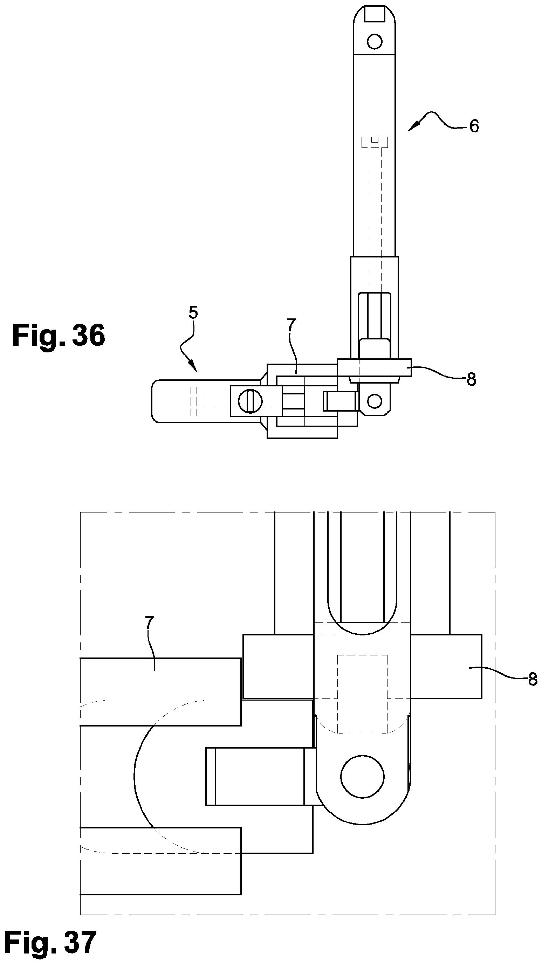

Si ce basculement de la branche est poursuivie jusqu'à sa course maximum (figures 36 et 37), et correspondant à la branche repliée sensiblement parallèlement à la face avant, on observe que la stabilité de cette position résulte de la coopération de l'organe de fixation de la branche avec celui de la face avant par la face latérale de l'extrémité ou tête de l'organe de fixation de la branche avec la surface plane de la face terminale de l'organe de fixation de la face avant.

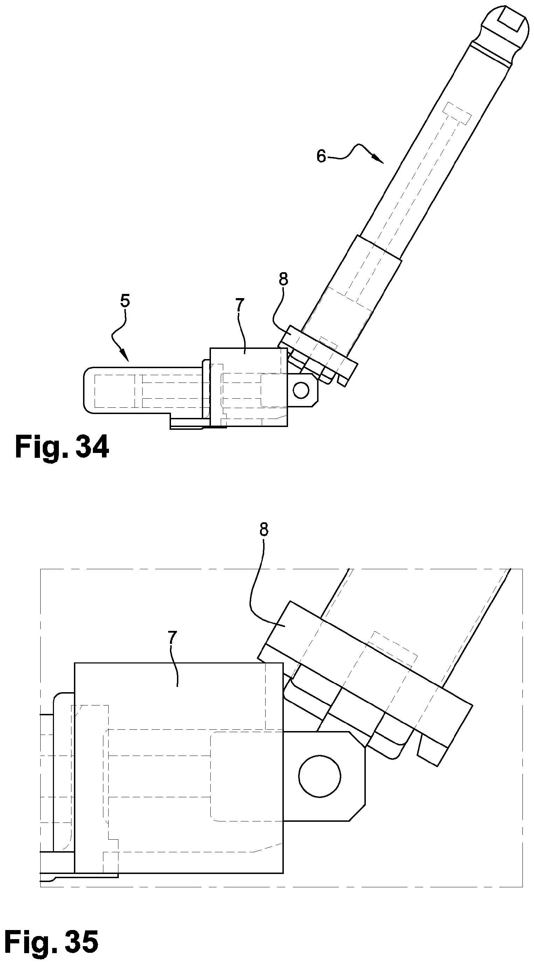

Enfin on a représenté en relation avec les figures 34 et 35 le débattement de l'organe de fixation de la branche par rapport à celui de la face avant dans le cadre du déplacement de la branche dans le plan vertical, selon la terminologie adoptée dans le cadre de la présente description. Là encore, on observe l'instabilité du débattement illustré, que celui-ci intervienne en direction du haut ou du bas. Cette instabilité résulte d'une part, de la coopération d'une arête de la face terminale de l'organe de fixation de la face avant avec la surface plane de la face terminale de l'organe de fixation e la branche, et d'autre part, de l'action des ressorts outre de la liaison des organes d'articulation correspondants.

On conçoit tout l'intérêt de la présente invention, qui permet de manière simple mais efficace, de disposer d'un grand nombre de degrés de liberté des branches par rapport à la face avant d'une monture de lunettes, optimisant tout à la fois le confort de l'utilisateur, et l'optimisation d'une telle monture à l'évitement des conséquences de chocs et autres déformations. De plus, on augmente le confort de l'utilisateur, en raison d'une plus grande capacité d'adaptation d'une telle monture aux différentes morphologies des utilisateurs. Enfin, on dispose d'une stabilité accrue des positions opérationnelles de la monture, respectivement en mode porté et en mode replié.

## Revendications

1. Monture de de lunettes comprenant une face avant (1) de support des verres, sensiblement orientée dans un plan vertical lors du port de ladite monture, et de branches (2) reliées à la face avant au moyen de charnières (4), lesdites charnières comportant chacune un organe de fixation (5, 6), respectivement solidaires de la face avant (1) de la monture et des branches (2), recevant chacun un organe d'articulation (11, 12) dont l'extrémité libre est pourvue d'un axe d'articulation (23, 24), lesdits axes d'articulation étant perpendiculaires l'un par rapport à l'autre, ***caractérisée* en ce que** ::
- les organes de fixation (5, 6) sont creux et définissent un fourreau cylindrique,
- les organes d'articulation (11, 12) comportent chacun une tige (17, 18), destinée à être reçue dans le fourreau respectif, tige dont l'une des extrémités est pourvue d'une butée (13, 14), et dont l'autre extrémité est munie dudit axe d'articulation, chacune des tiges recevant un anneau coulissant (19, 20) ou organe équivalent (32, 33) soumis à l'action d'un ressort (15, 16) venant en appui contre la butée (13, 14), ledit anneau ou organe équivalent étant solidaire de l'organe de fixation correspondant au voisinage de l'extrémité libre de ce dernier,
- les axes d'articulation (23, 24) des organes d'articulation (11, 12) sont solidarisés l'un à l'autre au moyen d'un organe de liaison (25) traversé par lesdits axes d'articulation (23, 24).

2. Monture de lunettes selon la revendication 1, ***caractérisée* en ce que** les extrémités libres (7, 8) des organes de fixation (5, 6) présentent une forme parallélépipédique.

3. Monture de lunettes selon la revendication 2, ***caractérisée* en ce que** la surface desdites extrémités libres des organes de fixation est plate.

4. Monture de lunettes selon l'une des revendications 2 et 3, ***caractérisée* en ce que** l'organe de fixation (5) sur la face avant (1) présente, sur l'une de ses faces latérales émanant de l'extrémité libre, un évidement (9), et **en ce que** l'organe de fixation (6) sur la branche (2) présente une excroissance (10) émergeant de sa surface plane, de dimensions sensiblement correspondantes à la largeur de l'évidement (9), afin d'être reçu dans celui-ci d'une part, lorsque la branche est ouverte, et d'autre part, lorsque la branche est repliée sensiblement parallèlement à la face avant.

5. Monture de lunettes selon la revendication 4, ***caractérisée* en ce que** l'évidement (9) est constitué par une lumière allongée, débouchant au niveau de la surface plane de l'extrémité libre de l'organe de fixation (5) sur la face avant (1).

6. Monture de lunettes selon l'une des revendications 1 et 2, ***caractérisée* en ce que** seule une partie de la surface des extrémités libres des organes de fixation (7, 8) est plate, lesdites surfaces comportant respectivement des excroissances et des évidements de forme complémentaire aptes à coopérer entre eux.

## Patentansprüche

1. Brillengestell mit einer Vorderseite (1) zur Glashalterung, die beim Tragen dieses Gestell im Wesentlichen in vertikaler Ebene ausgerichtet ist sowie Bügeln (2), die mit der Vorderseite über Scharniere (4) verbunden sind, jedes dieser Scharniere enthält ein Befestigungselement (5, 6), das jeweils mit der Vorderseite (1) des Gestells und den Bügeln (2) verbunden ist, wobei jeder ein Scharnierelement (11, 12) aufnimmt, dessen freies Ende mit einem Scharnierstift (23, 24) versehen ist, diese Scharnierstifte stehen senkrecht zueinander, **dadurch *gekennzeichnet, dass****:*
- die Befestigungselemente (5, 6) hohl sind und eine zylindrische Hülle definieren,
- die Scharnierelemente (11, 12) jeweils eine Stange (17, 18) enthalten, zur Aufnahme in die jeweilige Hülle, eines der Enden dieser Stange ist mit einem Anschlag (13, 14) versehen, das andere Ende ist mit dem erwähnten Scharnierstift versehen, jede der Stangen nimmt einen Gleitring (19, 20) oder ein gleichwertiges Element (32, 33) auf, das von einer Feder (15, 16) abhängt, die gegen den Anschlag (13, 14) drückt., dieser Ring oder das gleichwertige Element sind fest mit dem entsprechenden Befestigungselement in der Nähe seines freien Endstücks verbunden,
- die Scharnierstifte (23, 24) und die Scharnierelemente (11, 12) werden miteinander über ein Verbindungselement ((25) verbunden, durch das diese Scharnierstifte (23, 24) hindurchführen.

2. Brillengestell nach Anspruch 1, ***dadurch gekennzeichnet, dass*** die freien Enden der (7, 8) Befestigungselemente (5, 6) eine Quaderform haben.

3. Brillengestell nach Anspruch 2, ***dadurch gekennzeichnet, dass*** die Oberfläche der erwähnten freien Enden der Befestigungselemente flach ist.

4. Brillengestell nach einem der Ansprüche 2 und 3, ***dadurch gekennzeichnet, dass*** das Befestigungselement (5) auf der Vorderseite (1) auf einer seiner Seitenflächen, die aus dem freien Ende herausragen, eine Vertiefung (9) aufweist und *dadurch, dass* das Befestigungselement (6) auf dem Bügel (2) einen Vorsprung (10) aufweist, der aus der ebenen Fläche herausragt und dessen Maße im Wesentlichen der Breite der Vertiefung (9) entsprechen, so dass er darin aufgenommen werden kann, sowohl wenn der Bügel offen ist, wie wenn der Bügel im Wesentlichen parallel zur Vorderseite eingeklappt ist.

5. Brillengestell nach Anspruch 4, ***dadurch gekennzeichnet, dass*** die Vertiefung (9) aus einer länglichen Öffnung besteht, die in Höhe der ebenen Fläche des freien Endes des Befestigungselementes (5) auf der Vorderseite (1) mündet.

6. Brillengestell nach einem der Ansprüche 1 und 2, ***dadurch gekennzeichnet, dass*** nur ein Teil der Fläche der freien Enden der Befestigungselemente (7, 8) flach ist, dabei enthalten diese Flächen jeweils Vorsprünge und Vertiefungen komplementärer Form, die miteinander zusammenarbeiten können.

## Claims

1. A spectacle frame comprising a front face (1) for supporting the lenses, substantially oriented in a vertical plane when said frame is being worn, and temples (2) connected to the front face by means of hinges (4), said hinges each comprising an attachment member (5, 6), respectively rigidly connected to the front face (1) of the frame and to the temples (2), each receiving a hinging member (11, 12) having its free end provided with a hinge pin (23, 24), said hinge pins being perpendicular to each other, ***characterized* in that**:
▪ the attachment members (5, 6) are hollow and define a cylindrical sheath,
▪ the hinging members (11, 12) each comprise a rod (17, 18), intended to be received in the respective sheath, one of the ends of the rod being provided with an abutment (13, 14) and the other end being provided with said hinge pin, each of the rods receiving a sliding ring (19, 20) or an equivalent member (32, 33) submitted to the action of a spring (15, 16) bearing against the abutment (13, 14), said ring or equivalent member being rigidly connected to the corresponding attachment member near the free end thereof,
▪ the hinge pins (23, 24) of the hinging members (11, 12) are rigidly connected to each other by means of a connection member (25) crossed by said hinge pins (23, 24).

2. The spectacle frame of claim 1, ***characterized* in that** the free ends (7, 8) of the attachment members (5, 6) have a parallelepipedal shape.

3. The spectacle frame of claim 2, ***characterized* in that** the surface of said free ends of the attachment members is flat.

4. The spectacle frame of any of claims 2 and 3, ***characterized* in that** the attachment member (5) on the front face (1) has, on one of its lateral faces starting from the free end, a recess (9), and **in that** the attachment member (6) on the temple (2) has a protrusion (10) emerging from its planar surface, of dimensions substantially corresponding to the width of the recess (9), to be received therein, on the one hand, when the temple is open and, on the other hand, when the temple is folded back substantially parallel to the front face.

5. The spectacle frame of claim 4, ***characterized* in that** the recess (9) is formed by an elongated opening, emerging at the level of the planar surface of the free end of the attachment member (5) on the front face (1).

6. The spectacle frame of any of claims 1 and 2, ***characterized* in that** only a portion of the surface of the free ends of the attachment members (7, 8) is flat, said surfaces respectively comprising protrusions and recesses of complementary shape capable of cooperating together.
